# EUROPÄISCHE PATENTSCHRIFT

(11) **EP 0 828 098 B1**
(45) Veröffentlichungstag und Bekanntmachung des Hinweises auf die Patenterteilung: **09.05.2001**
(21) Anmeldenummer: 97114971.1
(22) Anmeldetag: 29.08.1997
(51) Int. Cl.: F16H 61/28, F16H 61/32, B60K 41/22

(54) **Anordnung zum Betätigen einer Schaltvorrichtung eines Zahnräderwechselgetriebes und zum Ein- und Ausrücken einer Hauptkupplung**
Device for actuating a change-speed gearbox shift and a master clutch engagement
Dispositif pour actionner la commande d'une boîte de vitesses et l'engagement d'un embrayage principal

(30) Priorität: 04.09.1996 DE 19635867
(43) Veröffentlichungstag der Anmeldung: 11.03.1998
(73) Patentinhaber: DaimlerChrysler AG, 70567 Stuttgart (DE)
(72) Erfinder: Peuster, Carsten Werner, 73730 Esslingen (DE); Stengel, Martin, 73660 Urbach (DE); Wörner, Günter, 71394 Kernen (DE)

(56) Entgegenhaltungen:
- DE-A- 4 336 446
- DE-C- 549 383
- FR-A- 1 405 575
- GB-A- 875 310
- GB-A- 1 127 966
- US-A- 5 357 821

## Beschreibung

Die Erfindung bezieht sich auf eine Anordnung nach dem Oberbegriff von Patentanspruch 1.

Bei einer Anordnung der eingangs genannten Art nach einem betriebsinternen Stand der Technik steht ein Elektromotor mit der Schnecke eines Schneckengetriebes in Antriebsverbindung, dessen Schneckenrad bewegungsfest gegenüber den beiden in Form je eines Exzenters verwendeten Getriebeeingangsgliedern angeordnet ist, wobei der eine Exzenter mit einem Kupplungsausrückhebel der Haupt-Kupplung und der andere Exzenter mit einer gabelförmigen Kulisse an dem einen Hebelarm eines Differentialhebels zusammenarbeiten, dessen anderer Hebelarm ein Zahnsegment aufweist, das in ein Zahnstangenprofil einer Schaltstange der Schaltvorrichtung eingreift. Dadurch stehen der Kupplungsausrückhebel und die Schaltstange in einer derartigen festen kinematischen Zuordnung zueinander, daß bei einer Gangschaltung stets die Haupt-Kupplung zuerst vollständig ausgerückt wird - danach der momentane Gang ausgerückt wird - anschließend die Schaltgasse des neuen Ganges angewählt wird (mit einer gesonderten Wähleinrichtung) - dann in weiterer Reihenfolge der neue Gang eingerückt wird - und zuletzt schließlich die Haupt-Kupplung wieder eingerückt wird. Diese sequentielle Abfolge der Betätigungen von Haupt-Kupplung und Schaltvorrichtung führt jeweils zu einer langen Schaltzeit bei den Gangumschaltungen.

Aus der DE 43 36 446 A1 ist eine gattungsfremde Anordnung zum Betätigen einer im Kraftfluß zwischen einem Antriebsmotor und einem Zahnräderwechselgetriebe vorzusehenden Haupt-Kupplung bekannt, bei welcher ein Elektromotor durch ein Schneckengetriebe mit einer Excenterscheibe eines Hilfsgetriebes zur Umwandlung einer Drehbewegung in eine hin- und hergehende Bewegung verbunden ist und das Ausgangsglied des letzteren auf die Haupt-Kupplung arbeitet. Die Excenterscheibe ist noch mit einem Federkraftspeicher zur Unterstützung der Kupplungsbetätigung gekoppelt.
Aus der EP 0 527 389 A1 ist eine weitere gattungsfremde Anordnung zum Umschalten eines zweistufigen Achsantriebes eines Nutzfahrzeuges bekannt, bei welcher ein Federkraftspeicher in Abhängigkeit von der Stellung einer den Kraftfluß des Antriebsdrehmomentes zur Antriebsachse steuernden Einrichtung - bspw. einer Kupplung - in die Schaltkraftübertragung zwischen der Schaltvorrichtung am Achsantrieb und einem elektrischen Schaltmotor einschaltbar ist, um die Schaltung erst dann durchzuführen, wenn der Kraftfluß zur Antriebsachse unterbrochen ist. Der Elektromotor arbeitet auf ein Schneckengetriebe, dessen Schneckenrad einen Excenter aufweist, welcher in eine Kulissenführung des Eingangsgliedes des Federkraftspeichers zur Umwandlung einer Drehbeweguung in eine hin- und hergehende Bewegung eingreift.

Die der Erfindung zugrunde liegende Aufgabe besteht im wesentlichen darin, bei einer Anordnung der eingangs genannten Art eine Verkürzung der Schaltzeit zu erreichen.

Die erläuterte Aufgabe ist gemäß der Erfindung mit den kennzeichnenden Merkmalen von Patentanspruch 1 in vorteilhafter Weise gelöst.

Bei der Anordnung nach der Erfindung wird die Grundausführung des mechanischen Schaltgetriebes nicht geändert, sondern alle Schalt- und Steuerungselemente können adaptiv an der Peripherie des Getriebeumfeldes angeordnet sein. Die Schaltzeiten können durch zeitgleiche oder zeitüberschneidende Aktivierung der Steuerfunktionen (Auskuppeln und Schalten als parallele Funktionsschritte) deutlich verkürzt werden. Durch die Verwendung von lediglich einem Aktuator und wenigen Steuerelementen können der Gesamtaufwand und damit die Kosten gering gehalten werden, ohne daß funktionelle Nachteile in Kauf genommen werden müßten.

Bei automatisierten Schaltgetrieben kann das Problem auftreten, daß - da Schaltungen aufgrund der Getriebekonzeption stets mit einer Zugkraftunterbrechung verbunden sind - in bestimmten Betriebszuständen (z.B. Beschleunigungsvorgänge) durch die Unterbrechung des Antriebsmomentes ein Konfortmangel infolge auftretender Fahrzeuglängsschwingungen spürbar wird. Bei der Anordnung nach der Erfindung ist es daher von Vorteil, daß das kritische Schaltmanöver in einem kurzen zeitlichen Ablauf vonstatten geht. Auskuppeln und Gang herausnehmen können zeitgleich abgewickelt werden, um den gewünschten Schaltzeitgewinn zu erreichen, wobei ein elektronisches Motormanagement in die Steuerung einbezogen sein kann.

Es treten allerdings auch Betriebszustände, z.B. Bergabfahrten, auf, in denen funktionstechnisch eine sequentielle Abfolge der Betätigungen von Haupt-Kupplung und Schaltvorrichtung notwendig ist. Auch in dieser Hinsicht bietet die Anordnung nach der Erfindung die Voraussetzung, daß ein variabler Einsatz der Einzelfunktionen bei der Steuerung der Gangschaltung erfolgen kann.

Bei der Anordnung nach der Erfindung kann über einen Aktuator (Stellmotor in elektromechanischer oder hydraulischer Basisausführung) ein Schneckengetriebe angetrieben werden, das über einen Exzenter das Ein- und Ausrücken der Haupt-Kupplung aktiviert und sequentiell oder parallel hierzu den Schalt- und Wählvorgang. Im unterschied zu der Anordnung nach dem betriebsinternen Stand der Technik wird bei der Anordnung nach der Erfindung über eine kraft- oder formschlüssige Hilfskupplung, die durch ein von einem Stellmotor angetriebenes Kupplungsstellglied ein- und ausrückbar ist, die Schalt- und Wählfunktion so initiiert, daß ein optimaler Betriebsablauf entsteht. Alle hier aufgeführten Grundfunktionen können in Modulbauweise realisiert sein, einschließlich einer elektronischen Steuereinheit für den Schaltungsablauf.

Bei der Anordnung nach der Erfindung können die Schalt- und Wähloperationen gemäß der Patentanmeldung mit dem amtlichen Aktenzeichen DE 196 10 104.2 A (=Daim 25 633/4 eig) oder gemäß der Patentanmeldung mit dem amtlichen Aktenzeichen DE 196 35 866.3 A (=Daim 25 890/4 eig) ausgeführt werden. Die betreffenden Funktionseinheiten können ebenfalls im Antriebsmodul untergebracht werden.

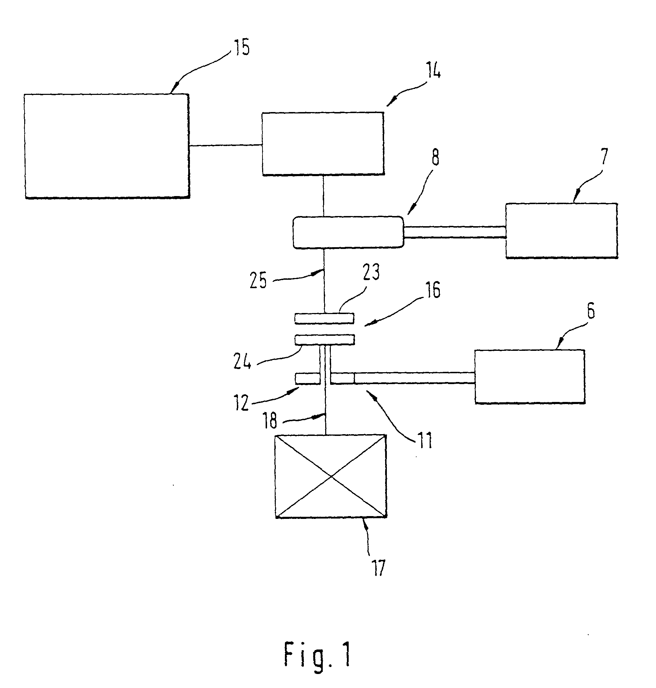

Die Erfindung ist nachstehend anhand eines in der Zeichnung schematisch dargestellten Ausführungsbeispieles näher beschrieben. In der Zeichnung bedeuten
- Fig. 1: eine Anordnung zum Betätigen einer Schaltvorrichtung und zum Ein- und Ausrücken einer Haupt-Kupplung nach der Erfindung mit einer schematisierten Darstellung der Funktionsglieder,

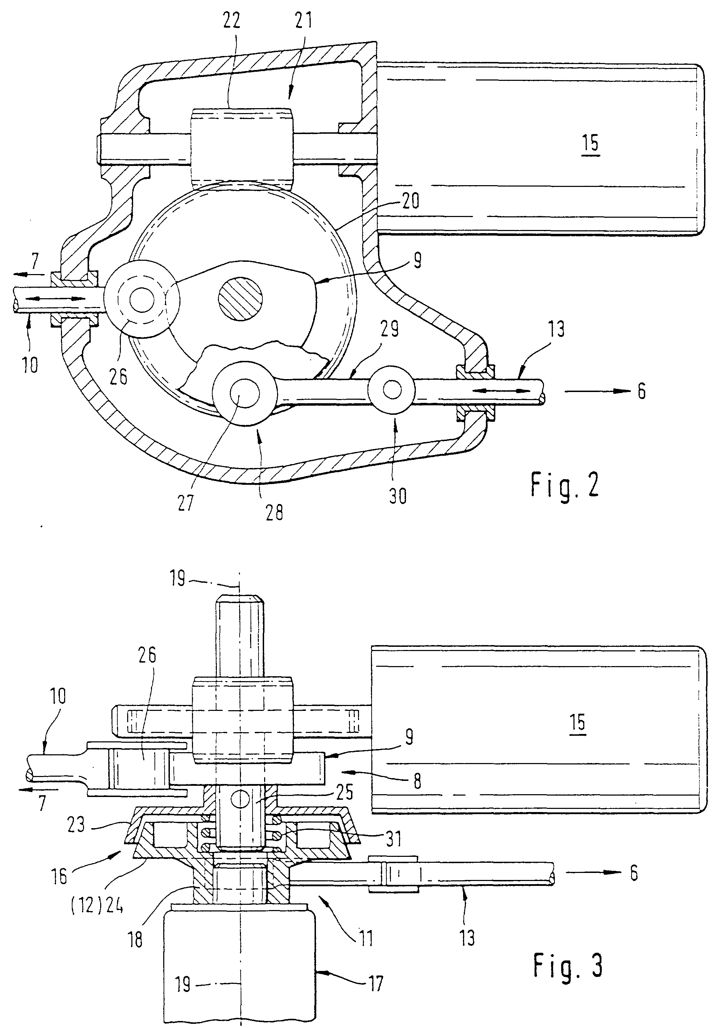

- Fig. 2: eine etwas detailliertere Darstellung der Anordnung von Fig. 1 in einer Teil-Seitenansicht,
- Fig. 3: eine ebenfalls etwas detailliertere Darstellung der Anordnung von Fig. 1 anhand eines Teil-Schnittes,
- Fig. 4: ein Diagramm für die zeitliche Abfolge der Betätigung von Schaltvorrichtung und Haupt-Kupplung während einer Gangschaltung bei der Anordnung nach dem betriebsinternen Stand der Technik, und
- Fig. 5: ein Diagramm für die zeitliche Abfolge der Betätigung von Schaltvorrichtung und Haupt-Kupplung während einer Gangschaltung bei der Anordnung nach der Erfindung.

Eine Schaltvorrichtung 6 eines nicht näher dargestellten Zahnräderwechselgetriebes und eine dem Zahnräderwechselgetriebe im Kraftfluß vorgeordnete Haupt-Kupplung 7 werden durch einen gemeinsamen elektrischen Stellmotor 15 betätigt. Dabei arbeitet der Stellmotor 15 über eine seine Drehzahl ins Langsame übersetzende Einrichtung 14 mit einer ausgangsseitigen Zwischenwelle 25 auf ein erstes Hilfsgetriebe 8 zur Umwandlung einer Drehbewegung in eine hin- und hergehende Bewegung zum Ein- und Ausrücken der Haupt-Kupplung 7 und auf ein zweites Hilfsgetriebe 11 zur Umwandlung einer Drehbewegung in eine hin- und hergehende Bewegung zum Betätigen der Schaltvorrichtung 6. Der Stellmotor 15 steht in direkter Antriebsverbindung mit einer koaxialen Schnecke 22 eines Schneckengetriebes 21, dessen Schneckenrad 20 ebenso drehfest zu einer koaxialen Zwischenwelle 25 angeordnet ist wie die eine Kupplungshälfte 23 einer Hilfskupplung 16.

Das Hilfsgetriebe 8 weist ein Getriebeeingangsglied in Form einer Kurvenscheibe 9 auf, welche drehfest in bezug auf Schnekkenrad 20 und Zwischenwelle 25 angeordnet ist und mit einem Nocken in Form einer Rolle 26 zusammenarbeitet, welche an dem einen Ende eines hin- und hergehende Bewegungen ausführenden Getriebeausgangsgliedes in Form eines Gestänges 10 drehbar gelagert ist, wobei das Gestänge 10 mit dem Kupplungsausrückhebel der Haupt-Kupplung 7 wirkungsmäßig verbunden ist.

Die andere Kupplungshälfte 24 der mit ihrer Kupplungsachse fluchtend zur Drehachse 19-19 des Schneckenrades 20 und der Zwischenwelle 25 angeordneten Hilfskupplung 16 ist bewegungsfest oder einteilig in bezug auf eine als Getriebeeingangsglied 12 des zweiten Hilfsgetriebes 11 verwendete Exzenterscheibe angeordnet, welche einen zur Drehachse 19-19 exzentrisch angeordneten Hubzapfen 27 aufweist, der über ein einachsiges Gelenk 28 mit einer Koppelstange 29 verbunden ist, die ihrerseits über ein weiteres einachsiges Gelenk 30 mit dem einen Gestängeende eines als Getriebeausgangsglied 13 des Hilfsgetriebes 11 hin- und hergehende Bewegungen ausführenden Gestänges wirkungsmäßig verbunden ist, wobei das Gestänge 13 als ein ausschließlich axial verschiebbar gegenüber einem Gehäuse angeordnetes Stellglied der Schaltvorrichtung 6 nach Patentanspruch 1 der Patentanmeldung mit dem amtlichen Aktenzeichen DE 196 35 866.3 A (=Daim 25 890/4 eig) verwendet sein kann.

Die andere Kupplungshälfte 24 der Hilfskupplung 16 ist gegenüber der einen Kupplungshälfte 23 durch wenigstens eine Ausrückfeder 31 ausrückbar und über ein hülsenförmiges Kupplungsstellglied 18, das von einem elektrischen Hubmagneten 17 antreibbar ist, einrückbar, und zwar unabhängig von der jeweiligen Stellung des der Haupt-Kupplung 7 zugeordneten Getriebeausgangsgliedes 10 gegenüber der Drehachse 19-19.

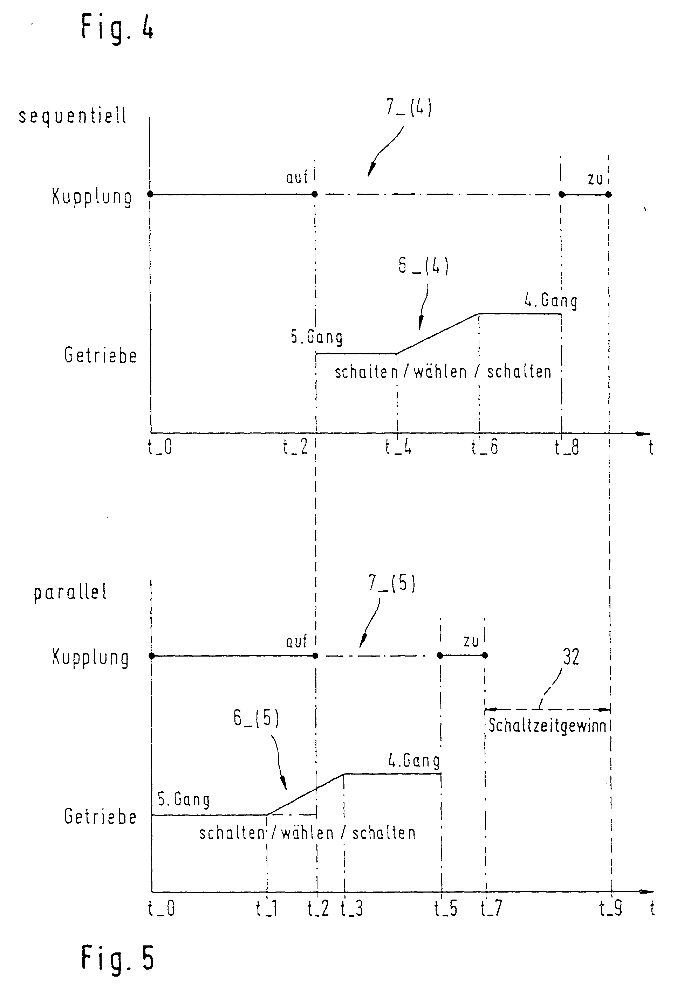

Aus dem Diagramm der Fig. 4 ist zu erkennen, daß beim betriebsinternen Stand der Technik eine sequentielle Abfolge, also eine Nacheinander-Betätigung von Haupt-Kupplung - Kurvenzug 7_(4) - und Schaltvorrichtung - Kurvenzug 6_(4) - charakteristisch ist. Wenn im Zeitpunkt t_0 ein Schaltsignal beispielsweise für eine Rückschaltung vom fünften Gang in den vierten Gang ausgelöst wird, vergeht zunächst eine Zeitspanne t_0 - t_2, welche für das Ausrücken der Haupt-Kupplung benötigt wird. Im Zeitpunkt t_2 beginnt eine Betätigung der Schaltvorrichtung dahingehend, daß zunächst der fünfte Gang ausgerückt wird, wobei eine Zeitspanne t_2 - t_4 vergeht. Im Zeitpunkt t_4 wird eine Wählbewegung zum Anwählen der Schaltgasse des vierten Ganges ausgesteuert, welche im Zeitpunkt t_6 erreicht wird, so daß mit dem Einlegen des vierten Ganges begonnen werden kann, welcher zum Zeitpunkt t_8 endgültig geschaltet ist, wonach sich eine letzte Zeitspanne t_8 - t_9 für das Wiedereinrücken der Haupt-Kupplung anschließt, so daß die Schaltzeit für die Rückschaltung "5 - 4" beim Stand der Technik gleich der Zeitspanne t_0 - t_9 ist.

Demgegenüber ergibt sich bei der Anordnung nach der Erfindung für die gleiche Rückschaltung vom fünften Gang in den vierten Gang gemäß Fig. 5 ein beträchtlicher Schaltzeitgewinn 32, weil beim Auftreten des Schaltsignales in Zeitpunkt t_0 nicht nur das Ausrücken der Haupt-Kupplung 7 gemäß dem Kurvenzug 7_(5), sondern auch das Ausrücken des fünften Ganges über die Schaltvorrichtung 6 gemäß dem Kurvenzug 6_(5) ausgelöst wird.

Dabei muß das Ausrücken des fünften Ganges nicht unbedingt zum Zeitpunkt t_0 beginnen, sondern dies kann auch früher oder später erfolgen, jedoch in jedem Falle noch vor dem Zeitpunkt t_2, bei welchem der Ausrückvorgang für die Haupt-Kupplung 7 beendet ist. Infolgedessen ist auch der fünfte Gang bereits im Zeitpunkt t_1 ausgerückt, also ebenfalls noch vor dem Zeitpunkt t_2. Das sich anschließende Anwählen der Schaltgasse für den vierten Gang ist bereits zum Zeitpunkt t_3 beendet, so daß das folgende Einlegen des vierten Ganges ebenfalls sehr früh, d.h. zum Zeitpunkt t_5 beendet ist, welcher wesentlich früher liegt als der korrespondierende Zeitpunkt t_8 beim Stand der Technik. Geht man in beiden Fällen von einer gleichgroßen Zeitspanne t_8 - t_9 = t_5 - t_7 für das Wiedereinrücken der Haupt-Kupplung aus, ergibt sich der eingangs erwähnte Schaltzeitgewinn 32 für die "5 - 4" - Schaltung bei der Anordnung nach der Erfindung.

Anstelle einer Konus-Kupplung können für die Hilfskupplung bei der Anordnung nach der Erfindung auch andere bekannte kraftschlüssige Kupplungen wie Lamellen-Kupplungen, elektrodynamische (Induktions)Kupplungen oder auch bekannte formschlüssige Kupplungen wie Klauenkupplungen, Verzahnungskupplungen, Ziehkeilkupplungen usw. verwendet werden.

Anstelle eines Exzentergetriebes kann für das Hilfsgetriebe 11 bei der Anordnung nach der Erfindung auch ein Kurbelgetriebe oder eine Ritzel-Zahnstange-Anordnung verwendet werden.

## Patentansprüche

1. Anordnung zum Betätigen der Schaltvorrichtung (6) eines Zahnräderwechselgetriebes und zum Ein- und Ausrücken einer im Kraftfluß dem Zahnräderwechselgetriebe vorgeordneten Haupt-Kupplung (7), mit einem Hilfsgetriebe (8) zur Umwandlung einer Drehbewegung eines Getriebeeingangsgliedes (9) in ein hin- und hergehende Bewegung eines der Haupt-Kupplung (7) zugeordneten Getriebeausgangsgliedes (10), mit einem Hilfsgetriebe (11) zur Umwandlung einer Drehbewegung eines Getriebeeingangsgliedes (12) in eine hin- und hergehende Bewegung eines der Schaltvorrichtung (6) zugeordneten Getriebeausgangsgliedes (13), mit einer Einrichtung (21) zum Antrieb der Gertiebeeingangsglieder (9, 12) der beiden Hilfsgetriebe (8, 11) durch einen gemeinsamen Stellmotor (15), und mit einer Einrichtung (16) zum An- und Abkoppeln des der Schaltvorrichtung zugeordneten Getriebeausgangsgliedes (13) in bezug auf seine getriebliche Verbindung gegenüber der Einrichtung (21) zum Antrieb der Getriebeeingangsglieder,
**dadurch gekennzeichnet**,
daß die beiden Getriebeeingangsglieder (9 und 12) durch eine als Einrichtung zum An- und Abkoppeln des der Schaltvorrichtung (6) zugeordneten Getriebeausgangsgliedes (13) verwendete Hilfskupplung (16) miteinander verbunden sind, und daß die Hilfskupplung (16) unabhängig von der Stellung des der Haupt-Kupplung (7) zugeordneten Getriebeausgangsgliedes (10) durch ein von einem Stellmotor (17) antreibbares Kupplungsstellglied (18) ein- und ausrückbar ist.

2. Anordnung nach Anspruch 1,
**dadurch gekennzeichnet,**
daß die Kupplungsachse (19-19) der Hilfskupplung (16) koaxial zur Drehachse (19-19) eines Schneckenrades (20) eines Schnekkengetriebes (21) angeordnet ist, dessen Schnecke (22) mit dem zu ihr koaxial angeordneten Stellmotor (15) zum Antrieb der Getriebeeingangsglieder (9 und 12) wirkungsmäßig verbunden ist.

3. Anordnung nach Anspruch 2,
**dadurch gekennzeichnet**,
daß das Schneckenrad (20) und die eine Kupplungshälfte (23) der Hilfskupplung (16) drehfest zu einer koaxialen Zwischenwelle (25) angeordnet sind.

4. Anordnung nach Anspruch 3,
**dadurch gekennzeichnet,**
daß ein lineare Hubbewegungen ausführender Elektromagnet (17) zum Antrieb des Kupplungsstellgliedes (18) der Hilfskupplung (16) verwendet und koaxial zur Zwischenwelle (25) angeordnet ist.

5. Anordnung nach Anspruch 4,
**dadurch gekennzeichnet**,
daß der Elektromagnet (17) durch das zugehörige Kupplungsstellglied (18) mit der anderen Kupplungshälfte (24) der Hilfskupplung (16) wirkungsmäßig verbunden ist.

## Claims

1. Arrangement for actuating the shift mechanism (6) of a change-speed gearbox and for engaging and disengaging a main clutch (7) arranged upstream of the change-speed gearbox in the flow of force, having an auxiliary mechanism (8) for transforming a rotary motion of a mechanism input member (9) into a reciprocating motion of a mechanism output member (10) allocated to the main clutch (7), an auxiliary mechanism (11) for transforming a rotary motion of a mechanism input member (12) into a reciprocating motion of a mechanism output member (13) allocated to the shift mechanism (6), a device (21) for driving the mechanism input members (9, 12) of the two auxiliary mechanisms (8, 11) by a common servomotor (15), and a device (16) for coupling and uncoupling the mechanism output member (13) allocated to the shift mechanism with regard to its drive connection relative to the device (21) for driving the mechanism input members, characterized in that the two mechanism input members (9 and 12) are connected to one another by an auxiliary clutch (16) used as the device for coupling and uncoupling the mechanism output member (13) allocated to the shift mechanism (6), and in that the auxiliary clutch (16), irrespective of the position of the mechanism output member (10) allocated to the main clutch (7), can be engaged and disengaged by a clutch final control element (18) drivable by a servomotor (17).

2. Arrangement according to Claim 1, characterized in that the clutch axis (19-19) of the auxiliary clutch (16) is arranged coaxially to the rotational axis (19-19) of a worm wheel (20) of a worm gear unit (21), the worm (22) of which is operatively connected to the servomotor (15) arranged coaxially to it for driving the mechanism input members (9 and 12).

3. Arrangement according to Claim 2, characterized in that the worm wheel (20) and the one clutch half (23) of the auxiliary clutch (16) are arranged in a rotationally fixed manner relative to a coaxial intermediate shaft (25).

4. Arrangement according to Claim 3, characterized in that an electromagnet (17) performing linear stroke motions is used for driving the clutch final control element (18) of the auxiliary clutch (16) and is arranged coaxially to the intermediate shaft (25).

5. Arrangement according to Claim 4, characterized in that the electromagnet (17) is operatively connected to the other clutch half (24) of the auxiliary clutch (16) by the associated clutch final control element (18).

## Revendications

1. Dispositif d'actionnement du mécanisme de changement de vitesses (6) d'une boîte de vitesses à engrenage, et d'embrayage et de débrayage d'un embrayage principal (7) placé en amont de la boîte de vitesses à engrenage, dans le flux des forces, avec une transmission auxiliaire (8) pour effectuer la conversion d'un mouvement de rotation d'un organe d'entrée de transmission (9) en un déplacement alternatif dans un sens et dans l'autre d'un organe de sortie de transmission (10) accouplé à l'embrayage principal (7), avec une transmission auxiliaire (11) pour la conversion d'un mouvement de rotation d'un organe d'entrée de boîte de vitesses (12) en un déplacement dans un sens et dans l'autre d'un organe de sortie de transmission (13) associé au mécanisme de changement de vitesses (6), avec un dispositif (21) pour l'entraînement des organes d'entrée de transmission (9, 12) des deux transmissions auxiliaires (8, 11) au moyen d'un servomoteur (15) commun, et avec un dispositif (16) pour l'accouplement et le débrayage de l'organe de sortie de transmission (13) associé au mécanisme de changement de vitesses, par rapport à sa liaison de transmission au dispositif (21) prévu pour l'entraînement des organes d'entrée de transmission, caractérisé en ce que les deux organes d'entrée de transmission (9 et 12) sont reliés ensemble au moyen d'un embrayage auxiliaire (16) utilisé en tant que dispositif pour l'embrayage et le débrayage de l'organe de sortie de transmission (13) associé au mécanisme de changement de boîte de vitesses (6), et en ce que l'embrayage auxiliaire (16) est susceptible d'être embrayé et débrayé, indépendamment de la position de l'organe de sortie de transmission (10) associé à l'embrayage principal (7), au moyen d'un organe d'asservissement d'embrayage (18) susceptible d'être entraîné par un moteur (17).

2. Dispositif selon la revendication 1, caractérisé en ce que l'axe d'embrayage (19-19) de l'embrayage auxiliaire (16) est coaxial à l'axe de rotation (19-19) d'une roue à vis (20), d'une transmission à vis (21), dont la vis (22) est reliée fonctionnellement au servomoteur (15) disposé coaxialement par rapport à elle, pour assurer l'entraînement des organes d'entrée de transmission (9 et 12).

3. Dispositif selon la revendication 2, caractérisé en ce que la roue à vis (20) et un premier demi-embrayage (23) de l'embrayage auxiliaire (16) sont assujetties en rotation par rapport à un arbre intermédiaire (25) coaxial.

4. Dispositif selon la revendication 3, caractérisé en ce qu'un électroaimant (17), effectuant des mouvements de course linéaires, est utilisé pour l'entraînement de l'organe d'asservissement d'embrayage (18) de l'embrayage auxiliaire (16) et est disposé coaxialement par rapport à l'arbre intermédiaire (25).

5. Dispositif selon la revendication 4, caractérisé en ce que l'électroaimant (17) est relié fonctionnellement à l'autre demi-embrayage (24) de l'embrayage auxiliaire (16), au moyen d'un organe d'asservissement d'embrayage (18) afférent.
